# EUROPÄISCHE PATENTSCHRIFT

(11) **EP 0 497 416 B1**
(45) Veröffentlichungstag und Bekanntmachung des Hinweises auf die Patenterteilung: **20.11.1996**
(21) Anmeldenummer: 92200202.7
(22) Anmeldetag: 24.01.1992
(51) Int. Cl.: H04N 5/95

(54) **Schaltungsanordnung zur Zeitbasis-Transformation eines digitalen Bildsignals**
Circuit arrangement for time-base transformation of a digital image signal
Circuit pour la transformation de la base de temps d'un signal d'image numérique

(30) Priorität: 01.02.1991 DE 4102993
(43) Veröffentlichungstag der Anmeldung: 05.08.1992
(73) Patentinhaber: Philips Patentverwaltung GmbH, 22335 Hamburg (DE); Philips Electronics N.V., 5621 BA Eindhoven (NL)
(72) Erfinder: Herrmann, Matthias, W-3300 Braunschweig (DE)
(74) Vertreter: von Laue, Hanns-Ulrich, Dipl.-Ing.

(56) Entgegenhaltungen:
- EP-A- 0 222 519
- DE-A- 3 705 505
- DE-A- 3 827 798
- US-A- 4 630 098

## Beschreibung

Die Erfindung betrifft eine digitale Schaltungsanordnung zur Transformation eines digitalen Bildsignals, das in einem mit diesem nicht verkoppelten Systemtakt vorliegt, in ein aus dem Systemtakt abgeleitetes Bezugshorizontalsynchronsignalraster mit einem Korrekturspeicher und mit einem Interpolator/Dezimator.

Wird ein digitales Bildsignal mit einem nicht mit dem Bildsignal verkoppelten Systemtakt abgetastet, oder liegt dieses Bildsignal bereits in einem solchen Takt vor, so bedeutet dies, daß sich das digitale Bildsignal einerseits und das Abtastraster andererseits frei zueinander verschieben kann. Dies gilt insbesondere bei in dem Bildsignal eventuell auftretenden Phasenverschiebungen, beispielsweise bei Wiedergabe des Signals von einem Videorecorder. Es ist nun vielfach wünschenswert, das digitale Bildsignal in einem orthogonalen Raster vorliegen zu haben, in dem es leichter, beispielsweise in Bildspeichern, weiterverarbeitet werden kann. Dazu kann das digitale Bildsignal in ein aus dem Systemtakt abgeleitetes und von dem Bildsignal unabängiges Bezugshorizontalsynchronraster transformiert werden. Schaltungsanordnungen, die dazu in der Lage sind, sind aus der Vorveröffentlichung "Fernseh- und Kino-Technik", 40. Jahrgang, Nr. 3/1986, Seiten 105 bis 111 sowie aus der älteren deutschen Patentanmeldung 39 35 453 bekannt. Bei diesen beiden Schaltungsanordnungen werden zur Transformation des Bildsignals ein Korrekturspeicher und ein Interpolator/Dezimator eingesetzt. Diese werden gemaß der Anordnung nach der älteren Patentanmeldung mittels einer Vorwärtssteuerung gesteuert.

Eine solche Steuerung führt insbesondere dann nicht zu einer wunschgemäßen Transformation des digitalen Bildsignals, wenn dieses gestört ist. Als Störungen kommen insbesondere Amplitudenfehler, Rauschüberlagerungen oder die durch Begrenzungen der Übertragungsbandbreite hervorgerufenen Abflachungen der Signalflanken in Betracht. Derartige Störungen führen grundsätzlich zu einer Verfälschung des von der Steuerung vorgegebenen Korrekturwertes und damit zu einer falschen Transformation des Bildsignals.

Es ist Aufgabe der Erfindung, eine Schaltungsanordnung der eingangs genannten Art anzugeben, welche möglichst unempfindlich gegen dem Bildsignal überlagerte Störungen ist.

Diese Aufgabe ist erfindungsgemäß dadurch gelöst, daß ein Regler vorgesehen ist, welchem ein mittels eines Diskriminators durch Vergleich eines in dem digitalen Bildsignal enthaltenen Horizontalsignals und des Bezugshorizontalsignals gewonnenes Regelabweichungssignal zugeführt wird und welcher an den Korrekturspeicher, dem das zu transformierende digitale Bildsignal zugeführt wird, eine erste Stellgröße, die die durch diesen vorzunehmende Transformation des digitalen Bildsignals um ganzzahlige Vielfache der Systemtaktperiode angibt, und an den Interpolator/Dezimator, dem das zu transformierende digitale Bildsignal zugeführt wird, eine zweite Stellgröße liefert, die die durch diesen vorzunehmende Transformation um Bruchteile der Systemtaktperiode angibt.

Zur Gewinnung des dem Regler zugeführten Regelabweichungssignals wird das in dem Bildsignal enthaltene Horizontalsynchronsignal bzw. dessen Raster mit einem Bezugshorizontalsynchronsignal bzw. dessen Raster verglichen. Dieses Bezugshorizontalsynchronsignalraster ist in einer festen vorgegebenen Weise aus dem Systemtakt abgeleitet und nicht von dem Bildsignal bzw. dessen eventuellen Phasenschwankungen abhängig. Durch Vergleich dieses Bezugshorizontalsynchronsignals mit dem in dem Bildsignal enthaltenen Horizontalsynchronsignal mittels eines Diskriminators wird nun ein Regelabweichungssignal gewonnen, das dem Regler zugeführt wird und aus welchem der Regler zwei Stellgrößen generiert.

Die Transformation des digitalen Bildsignals wird mittels des Korrekturspeichers und des Interpolators/Dezimators vorgenommen. Dabei kann der Korrekturspeicher nur solche Transformationen vornehmen, bei denen das Bildsignal um ganzzahlige Vielfache der Perioden des Systemtaktes transformiert wird. Daher wird diesem Korrekturspeicher eine erste Stellgröße der beiden von dem Regler gewonnenen zwei Stellgrößen zugeführt, die diejenige Transformation angibt, die ganzzahlige Vielfache der Systemtaktperioden beträgt. Für die weitere Fein-Transformation generiert der Regler die zweite Stellgröße, welche dem Interpolator/Dezimator zugeführt wird. Diese zweite Stellgröße gibt diejenige vorzunehmende Transformation an, welche eine Transformation des Bildsignals lediglich um Bruchteile der Systemtaktperioden darstellt. Die beiden Stellgrößen zusammen bewirken mittels des Korrekturspeichers und des Interpolators/Dezimators die gewünschte Transformation des digitalen Bildsignals in das Bezugshorizontalsynchronsignalraster, d.h. also eine Transformation, nach der das in dem Bildsignal enthaltene Horizontalsynchronsignal und das von dem Systemtakt abgeleitete Bezugshorizontalsynchronsignalraster zusammenfallen. Das transformierte Bildsignal liegt somit in einem bekannten orthogonalen Raster vor, das durch das Bezugshorizontalsynchronsignal vorgegeben ist.

Durch die Regelung der durch den Korrekturspeicher bzw. den Interpolator/Dezimator vorzunehmenden Transformation wird eine deutliche verbesserte Störunempfindlichkeit erreicht, so daß trotz eines gegebenenfalls gestörten Bildsignals eine nahzu fehlerfreie Zeitbasistransformation des Bildsignals stattfindet.

Nach einer Ausgestaltung der Erfindung ist vorgesehen, daß der Regler ein Proportional-Integral-Glied und ein diesem nachgeschaltetes Integral-Glied aufweist. Bei einem derartigen Regelkreis zweiter Ordnung, welcher zwei Freiheitsgrade aufweist, kann eine optimale Auslegung des Reglers vorgenommen werden.

Nach einer weiteren Ausgestaltung der Erfindung ist vorgesehen, daß der Regeler ein Regel-Taktsignal generiert, dessen steigende oder fallende Flanken jeweils neue und gültige Werte der Stellgrößen markieren. Dieses Regel-Taktsignal gibt diejenigen Zeitpunkte an, zu denen die Stellgrößen von nachfolgenden Schaltungselementen, insbesondere dem Korrekturspeicher, übernommen werden können. Dieses Regeltaktsignal kann dabei insbesondere vom Systemtakt abgeleitet sein.

Nach einer weiteren Ausgestaltung der Erfindung ist vorgesehen, daß der Regler ein Stellsignal liefert, in welchem beide Stellgrößen enthalten sind. Die weiter oben erläuterten beiden Stellgrößen können in einem Stellsignal enthalten sein, welches von nachfolgenden Schaltungsteilen jeweils nur teilweise ausgewertet wird. So kann beispielsweise der Korrekturspeicher nur diejenigen Teile des Stellsignals auswerten, welche eine Transformation um ganzzahlige Vielfache der Systemtaktperioden angeben, während der Interpolator/Dezimator nur diejenigen Teile des Stellsignals auswertet, die eine um Bruchteile der Systemtaktperioden vorzunehmende Transformation betreffen. Da es sich um ein digitales Stellsignal handelt, kann die Auswertung nur einzelner Elemente des Stellsignals in einfacher Weise durch Auswertung nur bestimmter Bits des Stellsignals erfolgen.

Nach einer weiteren Ausgestaltung der Erfindung ist vorgesehen, daß der Korrekturspeicher einen ersten und einen zweiten Speicherbereich aufweist, in die die Daten des digitalen Bildsignals parallel eingelesen werden, daß mit jedem neuen Wert der ersten Stellgröße die Ausleseadresse wechselweise des ersten bzw. des zweiten Speicherbereichs zusätzlich zu ihrer mit jedem Takt erfolgenden kontinuierlichen Veränderung nach Maßgabe der Stellgröße verändert wird und daß ein Umschaltsignal generiert wird, welches nach einer vorgebbaren Zeitspanne nach Veränderung der Ausleseadresse gemäß der Stellgröße denjenigen Speicherbereich angibt, dessen Ausleseadresse zuletzt nach Maßgabe der Stellgröße verändert wurde.

Ganz allgemein gilt für Schaltungsanordnungen, welche eine Zeitbasis-Transformation der beschriebenen Art mittels eines Korrekturspeichers und eines Interpolators/Dezimators vornehmen, daß eine in dem Korrekturspeicher um ganzzahlige Vielfache der Systemtaktperioden vorgenommene Transformation in dem nachfolgenden Interpolator/Dezimator bzw. in dessen Ausgangssignal Störungen hervorruft. Dies liegt daran, daß bei einer von dem Korrekturspeicher vorgenommenen Transformation in dem Interpolator/Dezimator nicht mehr alle aufeinanderfolgenden Abtastwerte des Bildsignals vorhanden sind, so daß der Interpolator/Dezimator die Interpolation nicht mehr korrekt vornehmen kann. Um dieses Problem zu umgehen, wird nun der Korrekturspeicher vorteilhafterweise so ausgelegt, daß er zwei Ausgangssignale liefert, die beide das digitale Bildsignal darstellen, von denen jedoch nur eines mit der jeweils letzten Transformation des Bildsignals in dem Korrekturspeicher beaufschlagt ist, bei denen also jeweils eines von einer gerade erfolgenden Transformation nicht erfaßt wird.

Zu diesem Zweck wird der Korrekturspeicher so ausgelegt, daß er zwei Speicherbereiche aufweist. Das digitale Bildsignal wird parallel in beide Speicherbereiche in gleicher Weise eingelesen. Beim Auslesevorgang, bei dem die Ausleseadressen der beiden Speicherbereiche kontinuierlich entsprechend dem Auslesevorgang verändert werden, wird nun mit jedem neuen Wert der ersten Stellgröße die Ausleseadresse wechselweise des ersten bzw. des zweiten Speicherbereichs zusätzlich nach Maßgabe der Stellgröße verändert. Ferner wird in dem Korrekturspeicher ein Umschaltsignal generiert, welches angibt, welche der Ausleseadressen zuletzt nach Maßgabe der Stellgröße verändert wurde. Dieses Umschaltsignal wird nach einer vorgebbaren Zeitspanne nach der vorgenommenen Transformation bzw. Erhöhung der Ausleseadresse gemäß der ersten Stellgröße generiert. Dieses Umschaltsignal wird insbesondere für nachfolgende Schaltungsteile generiert, in welchen bekannt sein muß, welches der beiden Ausgangssignale der beiden Speicherbereiche zuletzt transformiert wurde und wann dieses transformiert wurde.

Insbesondere kann dieses Umschaltsignal in dem nachgeschalteten Interpolator/Dezimator für eine korrekte Interpolation herangezogen werden. Dazu ist nach einer weiteren Ausgestaltung der Erfindung vorgesehen, daß in dem Interpolator/Dezimator zwei Registerketten mit jeweils einer Anzahl n hintereinandergeschalteter Register vorgesehen sind, daß einer der Registerketten das Ausgangssignal des ersten Speicherbereichs des Korrekturspeichers und der anderen Registerkette das Ausgangssignal des zweiten Speicherbereichs zugeführt wird, daß der Interpolator/Dezimator n Multiplizierer, n Koeffizientenspeicher und n Umschalter aufweist, daß jedem der Umschalter je ein Register der beiden Registerketten zugeordnet ist, und daß jeder Umschalter in Abhängigkeit des Umschaltsignals die Ausgangsdaten eines der beiden ihm zugeordneten Register auf den den beiden Registern zugeordneten Multiplizierer schaltet, in welchem diese mit einem in Abhängigkeit der zweiten Stellgröße aus dem zugeordneten Koeffizientenspeicher ausgelesenen Filterkoeffizienten multipliziert werden.

Die beiden Ausgangssignale der beiden Speicherbereiche des Korrekturspeichers werden also in zwei getrennte Registerketten des Interpolators/Dezimators eingelesen. Mittels Umschaltern kann nun zwischen diesen beiden Registerketten umgeschaltet werden, so daß also deren Ausgangssignale alternativ auf nachgeschaltete Multiplizierer geschaltet werden können. Diese Umschaltung wird in Abhängigkeit des von dem Korrekturspeicher generierten Umschaltsignals vorgenommen. Damit wird auch bei einer durch den Korrekturspeicher um ein ganzzahliges Vielfaches der Systemtaktperiode vorgenommenen Transformation sichergestellt, daß dem Interpolator/Dezimator jederzeit immer eine kontinuierliche Folge von aufeinanderfolgenden Abtastwerten des digitalen Bildsignals vorliegt.

Weisen die beiden Registerketten des Interpolators/Dezimators jeweils eine Anzahl von n Registern auf, so beträgt, wie nach einer weiteren Ausgestaltung der Erfindung vorgesehen ist, die vorgebbare Zeitspanne, nach der das Umschaltsignal denjenigen Speicherbereich des Korrekturspeichers angibt, dessen Ausleseadresse zuletzt nach Maßgabe der Stellgröße verändert wurde, vorteilhafterweise n+2 Perioden des Systemtaktes.

Anhand der Zeichnung wird ein Ausführungsbeispiel der Erfindung näher erläutert. Es zeigen:
Fig. 1 ein Blockschaltbild einer Ausführungsform der digitalen Schaltungsanordnung zur Zeitbasis-Transformation,
Fig. 2 ein Ausführungsbeispiel eines Reglers der Anordnung gemäß Fig. 1,
Fig. 3 ein Ausführungsbeispiel eines Korrekturspeichers der Anordnung gemäß Fig. 1 und
Fig. 4 ein Ausführungsbeispiel eines Interpolators/Dezimators der Anordnung gemäß Fig. 1.

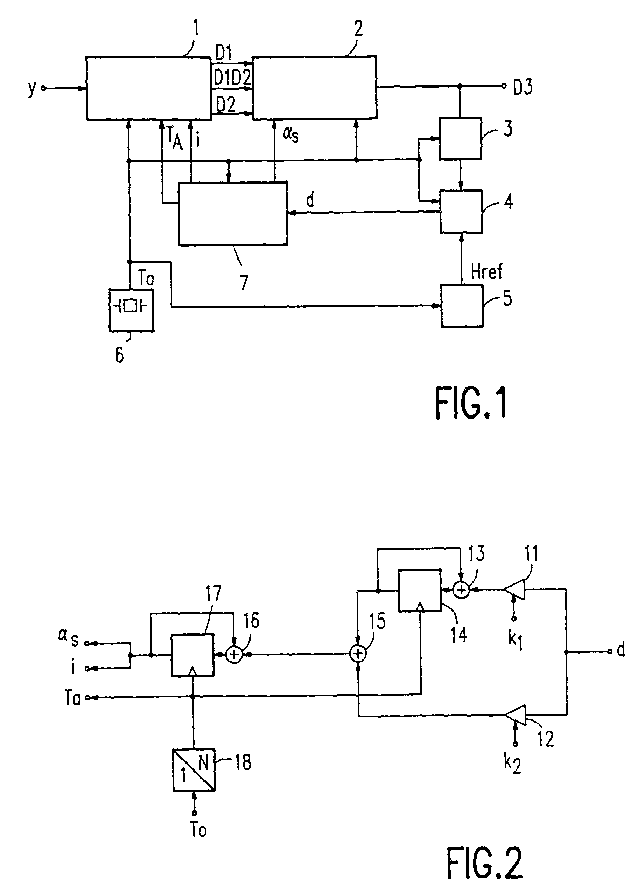

Einer in der Fig. 1 in Form eines Blockschaltbildes dargestellten digitalen Schaltungsanordnung zur Transformation eines digitalen Bildsignals, das in einem mit diesem nicht verkoppelten Systemtakt vorliegt, in ein aus dem Systemtakt abgeleitetes Bezugshorizontalsynchronsignalraster wird das digitale Bildsignal, das in der Fig. 1 mit Y bezeichnet ist, eingangsseitig einem Korrekturspeicher 1 zugeführt. Der Korrekturspeicher 1 liefert zwei digitale Ausgangssignale, die in der Fig. 1 mit D1 und D2 bezeichnet sind. Bei diesen Signalen handelt es sich um das Bildsignal. Nach jeder vorzunehmenden Transformation wird jeweils nur eines der beiden Signale D1 bzw. D2 transformiert. Das jeweils andere Bildsignal bleibt also unverändert. Diese Transformation wird jeweils wechselweise in den Ausgangssignalen D1 bzw. D2 vorgenommen. Diese beiden Bildsignale D1 und D2 sowie ein Umschaltsignal D1D2, welches das zuletzt transformierte Bildsignal angibt, werden einem Interpolator/Dezimator 2 zugeführt. Der Interpolator/Dezimator 2 liefert ausgangsseitig ein digitales Bildsignal D3, welches das transformierte digitale Bildsignal darstellt, das nunmehr in dem aus dem Systemtakt abgeleiteten Bezugshorizontalsynchronsignalraster vorliegt.

Um diese Transformation zu erreichen, wird das ausgangsseitige Signal D3 des Interpolators/Dezimators 2 einem Tiefpaßfilter 3 zugeführt, dessen Ausgangssignal einem Diskriminator 4 zugeführt wird. Dem Diskriminator 4 ist ferner ein Ausgangssignal eines Generators 5 zugeführt, welcher das Bezugshorizontalsynchronsignalraster generiert. Dazu ist dem Generator 5 ein von einem Systemtaktgenerator 6 generierter Systemtakt T₀ zugeführt. Der Generator 5 erzeugt aus diesem Systemtakt in fester vorgegebener Weise das Bezugshorizontalsynchronsignalraster. In dem Diskriminator 4 werden nun das in dem digitalen Bildsignal D3 enthaltene Horizontalsynchronsignal bzw. dessen Raster mit dem von dem Generator 5 erzeugten Bezugshorizontalsynchronsignal bzw. dessen Raster verglichen. Aus diesem Vergleich wird in dem Diskriminator 4 ein Regelabweichungssignal d generiert, welches in der Fig. mit d bezeichnet ist und welches einem Regler 7 zugeführt wird. Der Regler 7, welchem ebenfalls der von dem Systemtaktgenerator 6 generierte Systemtakt T₀ zugeführt wird, generiert aus dem Regelabweichungssignal d zwei Stellgrößen, welche in der Fig. mit i und αₛ bezeichnet sind. Die erste Stellgröße i gibt dabei diejenige Transformation an, die in dem Bildsignal um ganzzahlige Vielfache der Systemtaktperioden erfolgen soll. Diese erste Stellgröße i ist dazu dem Korrekturspeicher 1 zugeführt, in welchem eine Transformation gemäß dem Wert dieser Stellgröße i vorgenommen wird. Die zweite von dem Regler 7 gelieferte Stellgröße αₛ gibt diejenige Transformation an, die um Bruchteile der Systemtaktperioden vorzunehmen ist. Diese Stellgröße αₛ ist dem Interpolator/Dezimator 2 zugeführt, in dem gemäß dieser Stellgröße die erforderliche Fein-Transformation, welche weniger als eine Periode des Systemtaktes beträgt, vorgenommen wird. Beide Stellgrößen i und αₛ werden in dem Regler 7 zeitdiskret erzeugt. Ein Taktsignal T_{A}, das ebenfalls in dem Regler 7 erzeugt wird, gibt an, wann neue Stellgrößen i und αₛ erzeugt wurden und von dem Korrekturspeicher 1 und/oder dem Interpolator/Dezimator 2 übernommen werden können.

In der in Fig. 1 dargestellten Schaltungsanordnung werden also die beiden Stellgrößen i und αₛ und damit die von dem Korrekturspeicher und dem Interpolator/Dezimator vorgenommene Transformation des digitalen Bildsignals in Abhängigkeit von der Struktur und Dimensionierung des Reglers 7 gewonnen, welcher je nach Anwendung der Schaltung so ausgelegt werden kann, daß in dem digitalen Bildsignal Y und damit auch in dem Ausgangssignal der Schaltungsanordnung D3 enthaltene Störungen den Transformationsvorgang möglichst wenig beeinflussen.

In der Fig. 2 ist ein Regler dargestellt, wie er vorteilhafterweise in der Schaltungsanordnung gemäß Fig. 1 als Regler 7 eingesetzt werden kann.

Der in Fig. 2 dargestellte Regler enthält ein Proportional-Integral-Glied, dem ein weiteres Integral-Glied nachgeschaltet ist. Damit wird insgesamt ein Regelkreis zweiter Ordnung aufgebaut, welcher zwei Freiheitsgrade aufweist und somit bezüglich seines Regelverhaltens optimal ausgelegt werden kann.

Das dem in Fig. 2 dargestellten Regler eingangsseitig zugeführte Regelabweichungssignal d gelangt in dem Regler an die Eingänge zweier Multiplizierer 11 und 12. In dem Multiplizierer 11 wird eine Multiplikation dieses Signals mit einem Faktor k₁ und in dem Multiplizierer 12 eine Multiplikation mit dem Faktor k₂ durchgeführt. Durch die Wahl von k₁ bzw. k₂ kann also ein Verstärkungsmaß eingestellt werden. Das Ausgangssignal des Multiplizierers 11 gelangt auf einen Addierer 13, dessen Ausgangssignal einem Register 14 zugeführt ist. Das Ausgangssignal des Registers 14 ist wiederum auf einen zweiten Eingang des Addierers 13 rückgekoppelt. Das Ausgangssignal des Registers 14 gelangt ebenso wie das Ausganssignal des Multiplizierers 12 auf je einen Eingang eines weiteren Addierers 15, dessen Ausgangssignal wiederum einem Addierer 16 zugeführt ist. Der Ausgang des Addierers 16 ist mit einem Eingang eines weiteren Registers 17 verbunden, dessen Ausgangssignal auf einen zweiten Eingang des Addierers 16 geführt ist.

Der in Fig. 2 dargestellte Regler weist ferner einen Teiler 18 auf, dem eingangsseitig das Systemtaktsignal T₀ zugeführt ist und in welchem eine Teilung dieses Signals um einen Faktor N durchgeführt wird. Dieses heruntergeteilte Ausgangssignal des Teilers 18 dient dazu, die Register 14 und 17 zu takten.

Die eingangsseitige Parallelschaltung aus dem Multiplizierer 12 einerseits und der Reihenschaltung des Multiplizierers 11 mit dem zusammen mit dem Addierer 13 einen Integrator bildenden Register 14 andererseits, stellt ein Proportional-Integral-Glied dar. Diesem Proportional-Integral-Glied ist ein weiteres Integral-Glied nachgeschaltet, das durch das Register 17 und die mittels des Addierers 16 vorgenommene Rückkopplung gebildet wird.

Das Register 17 liefert ausgangsseitig ein Stellsignal, das die erste Stellgröße i und die zweite Stellgröße αₛ beinhaltet. Bei diesen beiden Stellgrößen i und αₛ handelt es sich um die in Fig. 1 ebenfalls mit i und αₛ bezeichneten Stellgrößen, die dem Korrekturspeicher 1 bzw. dem Interpolator/Dezimator 2 gemäß Fig. 1 zugeführt sind.

Die in dem in Fig. 2 dargestellten Regler enthaltenen Register 14 und 17 werden durch das Taktsignal T_{A}, das von dem Teiler 18 geliefert wird, getaktet. Somit stehen auch im Rythmus dieses Taktsignals T_{A} immer wieder neue Stellgrößen i und αₛ für nachfolgende Schaltungsteile zur Verfügung. Dieses Taktsignal T_{A} stellt ein Ausgangssignal des Reglers gemäß Fig. 2 dar, das nachfolgenden Schaltungsteilen signalisiert, wann gültige neue Werte der beiden Stellgrößen i und αₛ vorliegen.

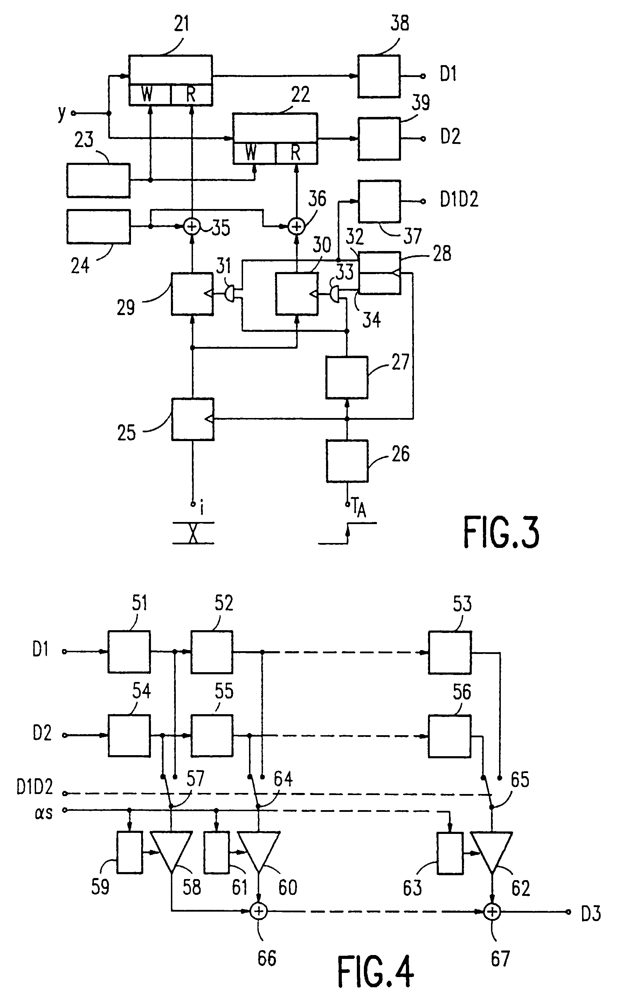

In Fig. 3 ist ein Korrekturspeicher in Form eines Blockschaltbildes dargestellt, wie er beispielsweise als Korrekturspeicher 1 für die Schaltungsanorndung gemäß Fig. 1 eingesetzt werden kann.

Dem in Fig. 3 dargestellten Korrekturspeicher ist eingangsseitig das noch nicht transformierte digitale Bildsignal Y zugeführt. Dieses gelangt in dem Korrekturspeicher an zwei Speicherbereiche 21 und 22, in die es parallel, d.h. also in beide Speicherbereiche in gleicher Weise, eingelesen wird. Die dafür erforderlichen Einleseadressen werden mittels eines Schreib-Zählers 23 generiert.

Für das Auslesen der Daten aus den beiden Speicherbereichen 21 und 22 ist ein Lese-Zähler 24 vorgesehen, dessen Ausgangsadresse sich kontinuierlich verändert. Soll nun jedoch durch den Korrekturspeicher eine Transformation des digitalen Bildsignals Y vorgenommen werden, so ist diese sich kontinuierlich ändernde Adresse des Zählers 24 zusätzlich zu verändern. Zu diesem Zweck sind folgende Schaltungselemente vorgesehen:

Die dem Korrekturspeicher zugeführte Stellgröße i, welche die mittels des Korrekturspeichers vorzunehmende Transformation um ganzzahlige Vielfache des digitalen Bildsignals angibt, ist in dem Korrekturspeicher gemäß Fig. 3 einem Register 25 zugeführt. Dieses Register 25 wird mittels eines von einem Impulsgenerator 26 generierten Taktsignals getaktet, das von diesem aus dem ihm zugeführten Taktsignal T_{A}, das von dem Regler der Gesamtschaltungsanordnung stammt, abgeleitet ist. Der Impulsgenerator 26 erzeugt in definierter Weise bei jeder positiven Flanke des Signals T_{A} einen Impuls. Dieses Taktsignal ist ferner dem Eingang eines Registers 27 zugeführt, welche in einer in der Fig. 3 nicht näher dargestellter Weise mit dem Systemtakt T0 getaktet wird. Ferner ist das Ausgangssignal des Impulsgenerators 26 dem Takteingang eines Flip-Flops 28 zugeführt. Das Ausgangssignal des Registers 25 gelangt an je einen Eingang zweier Register 29 und 30. Es ist ein erstes UND-Glied 31 vorgesehen, dessen einer Eingang mit dem Ausgang des Registers 27 und dessen anderer Eingang mit einem ersten Ausgang 32 des Flip-Flops 28 verbunden ist. Das Ausgangssignal des ersten UND-Gliedes 31 ist dem Takteingang des Registers 29 zugeführt.

Ferner ist ein zweites UND-Glied 33 vorgesehen, dessen einem Eingang das Ausgangssignal des Registers 27 zugeführt wird und dessen zweiter Eingang mit dem zweiten Ausgang 34 des Flip-Flops 28 verbunden ist. Das Ausgangssignal des zweiten UND-Gliedes 33 ist dem Takteingang des Registers 30 zugeführt.

Ein Ausgang des Registers 29 ist auf einen Addierer 35 geschaltet, in welchem eine Addition dieses Signals mit dem Ausgangssignal des Lese-Zählers 24 erfolgt. Das Ausgangssignal des Addierers 35 dient der Adressensteuerung für den Auslesevorgang des Speicherbereichs 21.

Das Ausgangssignal des Registers 30 wird in einem Addierer 36 ebenfalls mit dem Ausgangssignal des Lese-Zählers 24 addiert. Das Ausgangssignal des Zählers 36 gibt die Ausleseadresse des zweiten Speicherbereichs 22 an.

Das am ersten Ausgang 32 des Flip-Flops 28 anliegende Ausgangssignal gelangt auf eine Verzögerungsanordnung 37, welche mit dem Systemtaktsignal T₀ getaktet ist und welcher nach einer vorgegebenen Anzahl von m Takten des Systemtaktsignals das Umschaltsignal D1D2 liefert.

Das aus dem ersten Speicherbereich 21 ausgelesene Bildsignal ist einem Register 38 zugeführt, welches mit dem Systemtakt T₀ getaktet ist und ausgangsseitig das Signal D1 liefert. In entsprechender Weise ist das Ausgangssignal des zweiten Speicherbereichs 22 einem Register 39 zugeführt, was ausgangsseitig das Bildsignal D2 liefert.

Die Ausleseadresse der Speicherbereiche 21 und 22 wird, wie oben beschrieben, durch den Lese-Zähler 24 angegeben, dessen Ausgangswerte bzw. Adressen sich kontinuierlich verändern. Wird nun durch die Stellgröße i angegeben, daß in dem Korrekturspeicher eine Zeitbasis-Transformation zu erfolgen hat, so wird der Wert dieser Stellgröße dem Register 25 zugeführt. Mit dem Takt T_{A} erzeugt der Impulsgenerator 26 einen entsprechenden Impuls, welcher dazu führt, daß diese Stellgröße in das Register 25 übernommen wird. Die Stellgröße wird nachfolgend alternativ entweder von dem Register 29 oder von dem Register 30 übernommen.

Dazu ist das von dem Register 27 gelieferte Taktsignal über die beiden UND-Glieder 31 und 33 mit den beiden Ausgangssignalen des Flip-Flops 28 verknüpft. Das Flip-Flop 28 wird mit jedem Takt T_{A} bzw. dem daraufhin von dem Impulsgenerator 26 erzeugten Impuls umgeschaltet. Somit erscheint an den Ausgängen 32 bzw. 34 des Flip-Flops wechselweise ein High- bzw. Low-Signal. Dies wiederum führt dazu, daß das Ausgangssignal des Registers 27 nur entweder über das UND-Glied 31 an das Register 29 oder über das UND-Glied 33 an das Register 30 gelangt. Die beiden Register 29 und 30 werden also wechselweise getaktet. Dies führt dazu, daß jeweils neue in das Register 25 eingelesene Stellgrößen wechselweise in das Register 29 und das Register 30 eingelesen werden. Infolge der Verknüpfung der Ausgangssignale der Register 29 bzw. 30 mit dem Ausgangssignal des Lese-Zählers 24 mittels der Addierer 35 und 36 werden die Ausgangsadressen der beiden Speicherbereiche 21 und 22 wechselweise nach Maßgabe der Stellgröße i, die aus dem Register 29 bzw. 30 ausgelesen wird, zusätzlich zu dem von dem Lese-Zähler 24 vorgegebenen Wert verändert. Ist also beispielsweise ein erster Wert in der Stellgröße i über das Register 25 in das Register 29 eingelesen worden, so wird die Ausgangsadresse des ersten Speicherbereichs 21 zusätzlich zu dem von dem Lese-Zähler 24 vorgegebenen Adressenwert verändert. Infolgedessen erscheint das Ausgangssignal D1 um den Wert dieser Stellgröße i₁ transformiert. Das Ausgangssignal D2 ist jedoch von dieser Transformation nicht betroffen, da die Ausleseadresse für den Speicherbereich 22 sich ausschließlich nach Maßgabe der von dem Lese-Zähler 24 gelieferten Adresse änderte. Dies liegt daran, daß die Stellgröße i₁ infolge des Standes des Flip-Flops 28 nicht in das Register 30 übernommen wurde und somit auch nicht im Addierer 36 zur Leseadresse hinzuaddiert wurde. In diesem Beispielsfalle wird also durch einen Wert i₁ der Stellgröße i nur das Signal D1 verändert, während das Signal D2 nicht transformiert wird. Für einen nachfolgenden mit dem nächsten Takt T_{A} eingelesenen Wert i₂ der Stellgröße i wird nun mit dem nächsten Impuls des Impulsgenerators 26 das Flip-Flop 28 umgesteuert, so daß nunmehr dessen Ausgang 32 Low-Pegel und dessen Ausgang 34 High-Pegel hat. Somit gelangt nun an das Register 29 kein Taktsignal; statt dessen wird das Register 30 getaktet und die Stellgröße i₂ aus dem Register 25 in das Register 30 eingelesen. Infolge der Addition in dem Addierer 36 mit der von dem Lese-Zähler 24 gelieferten Adresse wird nun die Ausleseadresse des zweiten Speicherbereichs nach Maßgabe des Wertes i₂ der Stellgröße i verändert. Das Signal D2 ist also nun entsprechend der Stellgröße i₂ transformiert worden. Gleichzeitig bleibt das Signal D1 unverändert, da das Register 29 keinen veränderten Ausgangswert lieferte.

Dieser Vorgang setzt sich fort; es werden also wechselweise die Ausleseadressen der beiden Speicherbereiche 21 bzw. 22 nach Maßgabe neuer Werte der Stellgröße i verändert. Dies bedeutet umgekehrt formuliert, daß jeweils eines der beiden Ausgangssignale D1 und D2 von einer gerade vorgenommenen Transformation unbeeinflußt bleibt.

Das Umschaltsignal D1D2 gibt an, welches der beiden Ausgangssignale D1 bzw. D2 transformiert wurde. Dieses Umschaltsignal wird durch die Verzögerung 37 verzögert generiert.

Dieser in Fig. 3 dargestellte Korrekturspeicher kann insbesondere vorteilhaft in Verbindung mit einem in Fig. 4 dargestellten Interpolator/Dezimator eingesetzt werden. Beide in Verbindung miteinander können selbstverständlich vorteilhaft in der Schaltungsanordnung gemäß Fig. 1 eingesetzt werden.

Diesem in Fig. 4 dargestellten Interpolator/Dezimator werden die beiden von dem Korrekturspeicher gelieferten Bildsignale D1 und D2 sowie das Umschaltsignal D1D2 und die zweite Stellgröße αₛ zugeführt.

Der in Fig. 4 dargestellte Interpolator/Dezimator weist eine erste Registerkette auf, von der in der Fig. 4 der Einfachheit halber nur drei Register 51, 52 und 53 dargestellt sind. Selbstverständlich kann eine solche Registerkette mehr Register enthalten. Wichtig ist jedoch, daß die zweite Registerkette die gleiche Anzahl von Registern aufweist. In der Darstellung gemäß Fig. 4 sind dies die Register 54, 55 und 56. In die erste Registerkette, bestehend aus den Registern 51 bis 53, wird das digitale Bildsignal D1 eingelesen. In die zweite Registerkette, bestehend aus den Registern 54 bis 56, wird das Bildsignal D2 eingelesen. Dem Register 51 der ersten Registerkette und dem Register 54 der zweiten Registerkette ist ein Umschalter 57 zugeordnet, welchem ein Multiplizierer 58 nachgeschaltet ist. Mittels des Umschalters 57 kann alternativ das Ausgangssignal des Registers 51 oder des Registers 54 auf den Eingang des Multiplizierers 58 geschaltet werden. Diese Umschaltung geschieht in Abhängigkeit des Umschaltsignals D1D2, das zu diesem Zweck dem Umschalter 57 zugeführt ist. In dem Multiplizierer 58 wird das von dem Umschalter 57 gelieferte Signal mit einem Filterkoeffizienten multipliziert, welcher aus einem Koeffizientenspeicher 59 ausgelesen wird. Die Auswahl des aus dem Koeffizientenspeicher 59 ausgelesenen Filterkoeffizienten wird in Abhängigkeit der dem Koeffizientenspeicher 59 zugeführten zweiten Stellgröße αₛ vorgenommen.

In gleicher Weise sind den beiden Registern 52 und 55 ein Multiplizierer 60, ein Koeffizientenspeicher 61 und ein Umschalter 64 zugeordnet. Den Registern 53 und 56 sind ein Multiplizierer 62, ein Koeffizientenspeicher 63 und ein Umschalter 65 zugeordnet. Für die Arbeitsweise der Multiplizierer 60 und 62, der Koeffizientenspeicher 61 und 63 sowie der Umschalter 64 und 65 gilt das für den Multiplizierer 58, Koeffizientenspeicher 59 bzw. den Umschalter 57 Ausgeführte.

Die Ausgangssignale der Multiplizierer 58, 60 und 62 werden mittels Addierern 66 und 67 aufaddiert zu dem Ausgangssignal D3.

Die beiden Registerketten des in Fig. 4 dargestellten Interpolators/Dezimators sind zu dem Zwecke vorgesehen, daß in dem Integrator/Dezimator jederzeit, also auch nach einer in einem vorgeschalteten Korrekturspeicher vorgenommenen Zeitbasis-Transformation, eine kontinuierliche Folge von aufeinanderfolgenden Abtastwerten zur Verfügung steht. Ist nämlich beispielsweise in einem vorgeschalteten Korrekturspeicher eine Transformation um zwei Rasterpunkte, also um zwei Systemtaktperioden vorgenommen worden, so würden in einem konventionell aufgebauten Interpolator/Dezimator mit nur einer Registerkette in den Registern der Kette zwei Abtastwerte fehlen. Damit könnte eine korrekte Interpolation aber nicht mehr vorgenommen werden.

Aus diesem Grunde sind in dem in Fig. 4 dargestellten Interpolator/Dezimator zwei Registerketten vorgesehen, in die die digitalen Bildsignale D1 bzw. D2 parallel eingelesen werden bzw. diese durchlaufen.

Mittels der Umschalter 57, 64 und 65, die durch das Umschaltsignal D1D2 gesteuert werden, wird entweder die erste Registerkette mit den Registern 51 bis 53 oder alternativ die zweite Registerkette mit den Registern 54 bis 56 auf die nachgeschalteten Multiplizierer geschaltet. Dieser Umschaltvorgang wird in der Weise vorgenommen, daß nach einer in einem vorgeschalteten Korrekturspeicher erfolgten Zeitbasis-Transformation erst mit einer solchen Verzögerung auf das transformierte Bildsignal umgeschaltet wird, daß in diesem bereits wieder eine kontinuierliche Folge von aufeinanderfolgenden Abtastdaten lückenlos vorliegt. Wurde also beispielsweise in dem der ersten Registerkette zugeführten Bildsignal D1 in einem vorgeschalteten Korrekturspeicher eine Zeitbasis-Transformation vorgenommen, so sind zu dem Zeitpunkt der Transformation infolge des entsprechend vorliegenden Umschaltsignals D1D2 die Umschalter 57, 64 und 65 in dem Interpolator/Dezimator noch auf die zweite Registerkette geschaltet. Erst mit einer zeitlichen Verzögerung gibt das Umschaltsignal D1D2 eine Umschaltung auf die erste Registerkette an, so daß die Schalter 57, 64 und 65 entsprechend umgeschaltet werden. Nunmehr ist die erste Registerkette auf die nachgeschalteten Multiplizierer geschaltet. Zu dem Zeitpunkt des Umschaltens der Schalter 57, 64 und 65 sind in die Register 51 bis 53 der ersten Registerkette bereits nach der in dem vorgenommenen Korrekturspeicher vorgenommenen Rasterkonversion wieder lückenlos aufeinanderfolgende Abtastwerte eingelesen worden, so daß in dem Interpolator/Dezimator wieder eine störungsfreie Interpolation/Dezimation vorgenommen werden kann.

Die Umschalter 57, 64 und 65 bleiben nun solange auf die erste Registerkette geschaltet, bis das Umschaltsignal D1D2 eine Umschaltung auf die zweite Registerkette angibt. Dies ist jedoch erst dann der Fall, nachdem in einem vorgeschalteten Korrekturspeicher eine Zeitbasis-Transformation vorgenommen wurde und die nachfolgend in die zweite Registerkette D2 eingelesenen Werte wieder eine kontinuierliche Folge von Abtastwerten darstellen, also erst mit einer solchen zeitlichen Verzögerung, daß die "Sprungstelle", die infolge der von dem vorgeschalteten Korrekturspeicher vorgenommenen Zeitbasis-Transformation entstanden ist, in der zweiten Registerkette wieder überschrieben wurde.

Dieser Vorgang des wechselweisen Umschaltens zwischen den beiden Registerketten setzt sich in dieser Weise fort, wobei immer erst dann auf die jeweils andere Registerkette umgeschaltet wird, wenn die in diese Registerkette eingelesenen Bildsignalwerte nach einer in einem vorgeschalteten Korrekturspeicher vorgenommenen Transformation wieder eine kontinuierliche Folge aufeinanderfolgender Abtastwerte des digitalen Bildsignals darstellen.

Auf diese Weise ist für das Ausgangssignal des in Fig. 4 dargestellten Interpolator/Dezimators jederzeit sichergestellt, daß die in diesem erfolgende Interpolation/Dezimation immer nur ausschließlich aus einer Folge aufeinanderfolgender Abtastwerte vorgenommen wird, so daß also Störungen, die durch eine von einem vorgeschalteten Korrekturspeicher vorgenommene Zeitbasis-Transformation resultieren könnten, ausgeschaltet werden.

## Patentansprüche

1. Digitale Schaltungsanordnung zur Transformation eines digitalen Bildsignals, das in einem mit diesem nicht verkoppelten Systemtakt vorliegt, in ein aus dem Systemtakt abgeleitetes Bezugshorizontalsynchronsignalraster mit einem Korrekturspeicher (1) und mit einem Interpolator/Dezimator (2), dadurch gekennzeichnet,
daß ein Regler (7) vorgesehen ist, welchem ein mittels eines Diskriminators (4) durch Vergleich eines in dem digitalen Bildsignal enthaltenen Horizontalsignals und des Bezugshorizontalsignals gewonnenes Regelabweichungssignal (d) zugeführt wird und welcher an den Korrekturspeicher (1), dem das zu transformierende digitale Bildsignal zugeführt wird, eine erste Stellgröße (i), die die durch diesen vorzunehmende Transformation des digitalen Bildsignals um ganzzahlige Vielfache der Systemtaktperiode angibt, und an den Interpolator/Dezimator (2), dem das zu transformierende digitale Bildsignal zugeführt wird, eine zweite Stellgröße (αₛ) liefert, die die durch diesen vorzunehmende Transformation um Bruchteile der Systemtaktperiode angibt.

2. Schaltungsanordnung nach Anspruch 1,
dadurch gekennzeichnet, daß der Regler (7) ein Proportional-Integral-Glied und ein diesem nachgeschaltetes Integral-Glied aufweist.

3. Schaltungsanordung nach Anspruch 1 oder 2,
dadurch gekennzeichnet, daß der Regler (7) ein Regel-Taktsignal (T_{A}) generiert, dessen steigende oder fallende Flanken jeweils neue und gültige Werte der Stellgrößen markieren.

4. Schaltungsanordnung nach einem der Ansprüche 1 bis 3,
dadurch gekennzeichnet, daß der Regler (7) ein Stellsignal liefert, in welchem beide Stellgrößen (i, αₛ) enthalten sind.

5. Schaltungsanordnung nach einem der Ansprüche 1 bis 4,
dadurch gekennzeichnet, daß der Korrekturspeicher einen ersten (21) und einen zweiten (22) Speicherbereich aufweist, in die die Daten des digitalen Bildsignals parallel eingelesen werden, daß mit jedem neuen Wert der ersten Stellgröße die Ausleseadresse wechselweise des ersten bzw. des zweiten Speicherbereichs zusätzlich zu ihrer mit jedem Takt erfolgenden kontinuierlichen Veränderung nach Maßgabe der Stellgröße verändert wird und daß ein Umschaltsignal (D1D2) generiert wird, welches nach einer vorgebbaren Zeitspanne nach Veränderung der Ausleseadresse gemäß der Stellgröße denjenigen Speicherbereich angibt, dessen Ausleseadresse zuletzt nach Maßgabe der Stellgröße verändert wurde.

6. Schaltungsanordnung nach Anspruch 5,
dadurch gekennzeichnet, daß in dem Interpolator/Dezimator (2) zwei Registerketten mit jeweils einer Anzahl n hintereinandergeschaltete Register (51, 52, 53; 54, 55, 56) vorgesehen sind, daß einer der Registerketten das Ausgangssignal (D1) des ersten Speicherbereichs (21) des Korrekturspeichers (1) und der anderen Registerkette das Ausgangssignal (D2) des zweiten Speicherbereichs (22) zugeführt wird, daß der Interpolator/Dezimator (1) n Multiplizierer (58, 60, 62), n Koeffizientenspeicher (59, 61, 63) und n Umschalter (57, 64, 65) aufweist, daß jedem der Umschalter (57, 64, 65) je ein Register der beiden Registerketten zugeordnet ist, und daß jeder Umschalter in Abhängigkeit des Umschaltsignals (D1D2) die Ausgangsdaten eines der beiden ihm zugeordneten Register auf den den beiden Registern zugeordneten Multiplizierer schaltet, in welchem diese mit einem in Abhängigkeit der zweiten Stellgröße aus dem zugeordneten Koeffizientenspeicher ausgelesenen Filterkoeffizienten multipliziert werden.

7. Schaltungsanorndung nach Anspruch 5 und Anspruch 6,
dadurch gekennzeichnet, daß die vorgebbare Zeitspanne, nach der das Umschaltsignal (D1D2) denjenigen Speicherbereich (21, 22) des Korrekturspeichers (1) angibt, dessen Ausleseadresse zuletzt nach Maßgabe der ersten Stellgröße (i) verändert wurde, n+2 Perioden des Systemtaktes beträgt.

## Claims

1. A digital circuit arrangement for transforming a digital picture signal onto a reference horizontal synchronizing signal raster derived from the system clock, the digital picture signal being present at a system clock rate not locked with said digital picture signal, said arrangement comprising a correction memory (1) and an interpolator/decimator (2), characterized in that a control member (7) is provided which receives a deviation signal (d) obtained with the aid of a discriminator (4) by comparing a horizontal signal in the digital picture signal with the reference horizontal synchronizing signal, for applying a first correcting variable (i) to the correction memory (1), to which the digital picture signal to be transformed is applied, said first correcting variable indicating the transformation of the digital picture signal by integral multiples of the system clock period to be performed by said correction memory, and for applying a second correcting variable (αₛ) to the interpolator/decimator (2), to which the digital picture signal to be transformed is applied, said second correcting variable indicating the transformation by fractions of the system clock period to be performed by said interpolator/decimator.

2. A circuit arrangement as claimed in Claim 1, characterized in that the control member (7) comprises a proportional-integral element preceding an integral element.

3. A circuit arrangement as claimed in Claim 1 or 2, characterized in that the control member (7) generates a control clock signal (T_{A}) whose rising or falling edges mark new and valid values of the correcting variables.

4. A circuit arrangement as claimed in any one of Claims 1 to 3, characterized in that the control member (7) supplies a correction signal comprising the first and second correcting variables (i, αₛ).

5. A circuit arrangement as claimed in any one of Claims 1 to 4, characterized in that the correction memory has a first (21) and a second (22) memory site which receives the data of the digital picture signal in parallel for changing, with each new value of the first correcting variable, the read address of alternately the first and the second memory site in dependence upon the correcting variable in addition to its continuous change at each clock, and in that a switching signal (D1D2) is generated, indicating, after a predeterminable time interval after changing the read address in dependence upon the first correcting variable, that memory site whose read address was last changed in dependence upon the correcting variable.

6. A circuit arrangement as claimed in Claim 5, characterized in that the interpolator/decimator (2) comprises two register chains each having a plurality of n consecutively arranged registers (51, 52, 53; 54, 55, 56), in that one of the register chains receives the output signal (D1) of the first memory site (21) of the correction memory (1) and the other register chain receives the output signal (D2) of the second memory site (22), in that the interpolator/decimator (2) comprises n multipliers (58, 60, 62), n coefficient memories (59, 61, 63) and n switches (57, 64, 65), in that one register of each of the two register chains is associated with each switch (57, 64, 65), for switching, in dependence upon the switching signal (D1D2), the output data of one of the two associated registers to the multiplier associated with the two registers, said output data being multiplied in said associated multiplier by a filter coefficient from the associated coefficient memory in dependence upon the second correcting variable.

7. A circuit arrangement as claimed in Claim 5 or 6, characterized in that the predeterminable time interval, after which the switching signal (D1D2) indicates that memory site (21, 22) of the correction memory (1) whose read address was last changed in dependence upon the first correcting variable (i), is n+2 periods of the system clock.

## Revendications

1. Circuit numérique pour la transformation d'un signal d'image numérique qui est présent dans un rythme de système non couplé à celui-ci en une trame de signal de synchronisation horizontale de référence dérivée du rythme de système avec une mémoire de correction (1) et avec un interpolateur/calculateur de décimales (2), caractérisé en ce qu'il est prévu un régulateur (7) auquel est amené un signal de déviation (d) obtenu à l'aide d'un discriminateur (4) par comparaison d'un signal horizontal contenu dans le signal d'image numérique et du signal horizontal de référence et qui délivre à la mémoire de correction (1) à laquelle est amené le signal d'image numérique à transformer, une première grandeur de réglage (i) qui indique la transformation à effectuer par celle-ci du signal d'image numérique par un multiple entier de la période du rythme de système et délivre à l'interpolateur/calculateur de décimales (2) auquel est amené le signal d'image numérique à transformer une deuxième grandeur de réglage (αₛ) qui indique la transformation à effectuer par celui-ci par des fractions de la période du rythme de système.

2. Circuit selon la revendication 1, caractérisé en ce que le régulateur (7) présente un élément intégral proportionnel et un élément intégral monté en aval de celui-ci.

3. Circuit selon la revendication 1 ou 2, caractérisé en ce que le régulateur (7) génère un signal de rythme de régulateur (T_{A}) dont les flancs ascendants ou descendants marquent respectivement de nouvelles valeurs valables des grandeurs de réglage.

4. Circuit selon l'une des revendications 1 à 3, caractérisé en ce que le régulateur (7) délivre un signal de réglage dans lequel sont contenues deux grandeurs de réglage (i, αₛ).

5. Circuit selon l'une des revendications 1 à 4, caractérisé en ce que la mémoire de correction présente une première (21) et une deuxième (22) zone de mémoire dans lesquelles les données du signal d'image numérique sont sauvées parallèlement, qu'à chaque nouvelle valeur de la première grandeur de réglage, l'adresse de lecture en alternance de la première ou la deuxième zone de mémoire est modifiée en plus de la variation continue intervenant à chaque rythme en fonction de la grandeur de réglage et qu'un signal de commutation (D1D2) est généré et indique après une période de temps à prédéterminer après la modification de l'adresse de lecture conformément à la grandeur de réglage la zone de mémoire dont l'adresse de lecture a finalement été modifiée en fonction de la grandeur de réglage.

6. Circuit selon la revendication 5, caractérisé en ce que l'interpolateur/calculateur de décimales (2) comporte deux chaînes de registres avec respectivement un nombre n de registres (51, 52, 53; 54, 55, 56) successifs, que le signal de sortie (D1) de la première zone de mémoire (21) de la mémoire de correction (1) est amené à l'une des chaînes de registres et le signal de sortie (D2) de la deuxième zone de mémoire (22) est amené à l'autre chaîne de registres, que l'interpolateur/calculateur de décimales (1) présente n multiplicateurs (58, 60, 62), n mémoires de coefficients (59, 61, 63) et n commutateurs (57, 64, 65), qu'un registre des deux chaînes de registres est respectivement affecté à chacun des commutateurs (57, 64, 65), que chaque commutateur commute les signaux de sortie d'un des deux registres qui lui est affecté sur le multiplicateur affecté aux deux registres en fonction du signal de commutation (D1D2), multiplicateur dans lequel ceux-ci sont multipliés en fonction de la deuxième grandeur de réglage par un coefficient de filtrage lu de la mémoire de coefficients qui lui est affectée.

7. Circuit selon les revendications 5 et 6, caractérisé en ce que la période de temps à prédéterminer après laquelle le signal de commutation (D1D2) indique laquelle des deux zones de mémoire (21, 22) de la mémoire de correction (1) de l'adresse de lecture a finalement été modifiée en fonction de la première grandeur de réglage (i) s'élève à n + 2 périodes du rythme de système.
